# EUROPÄISCHE PATENTSCHRIFT

(11) **EP 0 593 509 B1**
(45) Veröffentlichungstag und Bekanntmachung des Hinweises auf die Patenterteilung: **30.08.1995**
(21) Anmeldenummer: 92911802.4
(22) Anmeldetag: 19.06.1992
(51) Int. Cl.: B60T 8/00

(54) **ANTRIEBSSCHLUPFREGELSYSTEM**
DRIVE-SLIP CONTROL SYSTEM
SYSTEME D'ANTIPATINAGE A L'ACCELERATION

(30) Priorität: 18.07.1991 DE 4123783
(43) Veröffentlichungstag der Anmeldung: 27.04.1994
(73) Patentinhaber: ROBERT BOSCH GMBH, 70442 Stuttgart (DE)
(72) Erfinder: BURG, Andreas, D-7144 Asperg (DE); ISELLA, Thomas, D-7145 Markgröningen (DE); SCHMITT, Johannes, D-7145 Markgröningen (DE)
(86) Internationale Anmeldenummer: DE9200503
(87) Internationale Veröffentlichungsnummer: WO9301960

(56) Entgegenhaltungen:
- DE-A- 3 540 708
- FR-A- 2 213 859
- GB-A- 2 175 717
- GB-A- 2 217 479

## Beschreibung

### Stand der Technik

Z.B. aus der WO 87/02948 ist ein Antriebsschlupfregelsystem mit den Merkmalen des Oberbegriffs des Anspruchs 1 bekannt.

### Vorteile der Erfindung

Durch die Erfindung wird mit einfachen und billigen Mitteln der jeweils an den einzelnen Bremsen eingesteuerte Bremsdruck und damit das Bremsmoment in guter Näherung bestimmt. Durch den Vergleich der Pulsdifferenzen der beiden angetriebenen Räder ist die vorhandene Differentialsperrwirkung bekannt. Diese Informationen können z.B. in einem ebenfalls vorhandenen Motormomentenregler berücksichtigt und damit kann dieser adaptiver ausgelegt werden. Es ist eine Korrelation zwischen Antriebs- und Bremsmoment möglich.

Das aufgebaute Sperrmoment zwischen den Antriebsrädern kann bestimmt und beeinflußt werden. Aus dem bekannten Druckniveau (Sperrmoment) kann die Fahrsituation bestimmt werden.

Unter Berücksichtigung der Druck-Volumenkennlinie und anderer Randbedingungen werden bei der Erfindung Druckaufbau- und Druckabbauzeiten für die aufeinanderfolgenden Pulse festgelegt, die zu den gewünschten Druckänderungen in den Radzylindern führen. Man kann diese nacheinander stattfindenden Druckänderungen beliebig wählen (festlegen), jedoch auch gleich groß wählen. Gemäß Anspruch 3 wird zu jeder der Druckstufen ein Zählerstand eines Vorwärts-Rückwärtszählers eingestellt, dem Pulszeiten für den Druckaufbau und den Druckabbau zugeordnet sind. Vorzugsweise werden diese Zeiten im Versuch ermittelt.

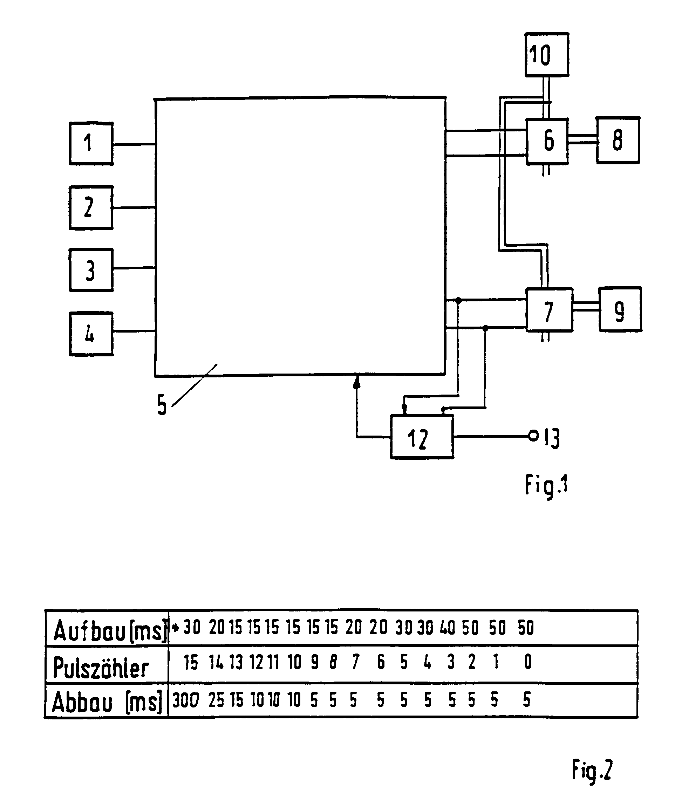

Anhand der Zeichnung wird ein Ausführungsbeispiel der Erfindung erläutert. Die Fig. 1 Zeigt ein Blockschaltbild einer Antriebsschlupfregelung mit den angetriebenen Rädern und den nicht angetriebenen Rädern zugeordneten Geschwindigkeitssensoren 1 bis 4. Ein elektronisches Steuergerät 5 gewinnt in bekannter Weise aus den Sensorsignalen Steuersignale für die angetriebenen Räder, die anzeigen, ob eine Durchdrehneigung vorliegt. (Regelabweichung BRA > 0). Ist dies der Fall, so werden von dem Steuergerät über die oberen Leitungen Pulse abgegeben; diese stellen während der Pulszeit Ventile 6 bzw. 7 in die Stellung, in der an den Bremsen 8 bzw. 9 Druck von der Druckquelle 10 eingesteuert wird. Verschwindet dann das Steuersignal, (BRA < 0) dann werden Druckabbaupulse über die unteren Leitungen zu den Ventilen 6 und 7 gegeben, die die Bremszylinder mit hier nur angedeuteten Rücklaufleitungen 11 bzw. 12 verbinden.

Mit den Zuleitungen zum Ventil 7 (für Ventil 6 nicht gezeigt), sind die Eingänge eines Vorwärts-Rückwärtszählers verbunden. Er steht zu Beginn einer Regelung immer in einer Ausgangsstellung z.B. Stellung 15. Dieser Stellung ist im Steuergerät eine Pulszeit T₁ für einen Druckaufbaupuls und eine andere Zeit T₁ für einen Druckabbaupuls zugeordnet. Das Auftreten des Steuersignals (BRA > 0) macht den ersten Puls mit der Zeit T₁ wirksam und baut damit Druck auf. Das Ende des Pulses stellt den Zähler 12 um eine Stellung weiter in Stellung 14. Auch dieser Stellung sind Pulse mit Längen T₂ und T₂' zugeordnet, wobei die Längen derart festgelegt sind, daß mit jedem Puls (sowohl Aufbau als Abbau) eine gleiche Druckänderung von z.B. 10 bar stattfindet. Die Druckaufbaupulse werden solange auf das Ventil 7 gegeben, bis das Steuersignal verschwindet (BRA < 0) z.B. bei Erreichen der Zählerstellung 10. Nun wird ein Druckabbaupuls mit der der Stellung 10 zugeordneten Druckabbaupulslänge wirksam gemacht, der Zähler in Stellung 11 gebracht und es folgen weitere Abbaupulse bis das Steuersignal (BRA > 0) wieder erscheint, oder auf Regelende erkannt wird.

In Fig. 2 ist eine Tabelle gezeigt, die in der mittleren Zeile die Stellungen des Zählers 12 aufweist und in den beiden anderen Zeilen die Zeiten für die Druckauf- und abbaupulse angibt, die bei dem jeweils herrschenden Druckniveau die vorgegebene gewünschte Änderung des Drucks herbeiführen.

An einer Klemme 13 wird ein die augenblickliche Stellung des Zählers 12 kennzeichnendes Signal abgegeben, das ein Maß des herrschenden Drucks ist und weiterverarbeitet werden kann.

Wird mit dem ersten Druckaufbaupuls in einer Antriebsschlupfregelung die Pumpe für die Druckerzeugung erst eingeschaltet, so muß dies durch eine längere Pulszeit dieses Pulses berücksichtigt werden. Andererseits ist es auch notwendig bei gleichzeitig beidseitigem Druckaufbau andere Pulszeiten zu wählen. Es muß also eine Umschaltung der Pulszeiten möglich sein.

## Patentansprüche

1. Antriebsschlupfregelsystem für ein Kraftfahrzeug bei dem bei Durchdrehneigung der angetriebenen Räder diese gebremst werden, wozu mit Hilfe einer Aufbaupulsreihe und einer Abbaupulsreihe für die Druckänderungsventile der Druck an den Radbremsen variiert wird, dadurch gekennzeichnet, daß die Pulszeiten der Pulsreihen derart gewählt sind, daß durch die einzelnen Pulse der Druck um einen vorgegebenen, vorzugsweise gleichen Betrag erhöht oder erniedrigt wird und daß aus der Zahl der Druckaufbau- und Druckabbaupulse und den einzelnen Pulsen zugeordneten Druckbeträgen die Höhe des jeweils herschende Bremsdruck ermittelt wird.

2. Antriebsschlupfregelsystem nach Anspruch 1, dadurch gekennzeichnet, daß bei jedem Puls der Druck um den gleichen Betrag erhöht bzw. erniedrigt wird und daß aus der Differenz der Druckaufbaupulse und der Druckabbaupulse sowie dem Änderungsbetrag pro Puls die Höhe des herrschenden Bremsdrucks ermittelt wird.

3. Antriebsschlupfregelsystem nach Anspruch 2, dadurch gekennzeichnet, daß zur Bildung der Differenz ein Vorwärts-Rückwärtszähler vorgesehen ist.

4. Antriebsschlupfregelsystem nach einem der Ansprüche 1 bis 3, dadurch gekennzeichnet, daß beim ersten Aufbaupuls bei der Pulszeitbemessung berücksichtigt wird, ob die Druckpumpe schon läuft.

5. Antriebsschlupfregelsystem nach einem der Ansprüche 1 bis 4, dadurch gekennzeichnet, daß bei der Pulszeitbemessung berücksichtigt wird, ob ein oder beidseitiger Druckaufbau erfolgt.

## Claims

1. Anti-slip control system for a motor vehicle in which when there is a tendency for the driven wheels to slip the said wheels are braked, for which purpose the pressure at the wheel brakes is varied using a series of build-up pulses and a series of reduction pulses for the pressure-changing valves, characterized in that the pulse times of the series of pulses are selected such that, by means of the individual pulses, the pressure is increased or reduced by a prescribed, preferably identical amount, and in that the level of the respectively prevailing brake pressure is determined from the number of pressure build-up pulses and pressure reduction pulses and the amounts of pressure assigned to the individual pulses.

2. Anti-slip control system according to Claim 1, characterized in that, at each pulse, the pressure is increased or reduced by the same amount, and in that the level of the prevailing brake pressure is determined from the difference of the pressure build-up pulses and the pressure reduction pulses and the amount of change per pulse.

3. Anti-slip control system according to Claim 2, characterized in that an incrementing/decrementing counter is provided for forming the difference.

4. Anti-slip control system according to one of Claims 1 to 3, characterized in that at the first build-up pulse it is taken into account during the apportionment of the pulse time whether the pressure pump is already operating.

5. Anti-slip control system according to one of Claims 1 to 4, characterized in that during the apportionment of the pulse time it is taken into account whether pressure is building up on one side or on both sides.

## Revendications

1. Système d'antipatinage à l'accélération, pour véhicule automobile dans lequel les roues motrices sont freinées lorsqu'elles ont tendance à s'emballer, en faisant baisser la pression au niveau des freins des roues au moyen d'une série d'impulsions d'augmentation de pression et d'une série d'impulsions de diminution de pression, caractérisé en ce que la durée des impulsions de chaque série sont choisies de manière qu'une impulsion fait monter ou descendre la pression d'une quantité donnée, la même de préférence, le niveau de la pression de freinage régnant étant déterminé par le nombre des impulsions d'augmentation ou de diminution et par la variation de pression associée à chaque impulsion.

2. Système d'antipatinage à l'accélération selon la revendication 1, caractérisé en ce que la pression de freinage augmente, ou diminue, d'une même quantité à chaque impulsion, le niveau de la pression de freinage régnant étant établi à partir de la différence entre les impulsions d'augmentation et celles de diminution ainsi que de la variation de pression associée à chaque impulsion.

3. Système d'antipatinage à l'accélération selon la revendication 2, caractérisé en ce que pour calculer la différence, on utilise un compteur-décompteur.

4. Système d'antipatinage à l'accélération selon une des revendication 1 à 3, caractérisé en ce qu'il prend en compte, dans le dimensionnement de la durée de l'impulsion lors de la première impulsion d'augmentation de pression, le fait que la pompe de pression tourne déjà.

5. Système d'antipatinage à l'accélération selon une des revendications 1 à 4, caractérisé en ce qu'il prend en compte, dans le dimensionnement de la durée d'impulsion, le fait que l'augmentation de pression s'effectue d'un côté ou des deux côtés.
